# EUROPEAN PATENT SPECIFICATION

(11) **EP 2 168 883 B1**
(45) Date of publication and mention of the grant of the patent: **17.09.2014**
(21) Application number: 09171260.4
(22) Date of filing: 24.09.2009
(51) Int. Cl.: B65D 19/18

(54) **Collapsible bin**
Faltbarer Behälter
Corbeille démontable

(30) Priority: 24.09.2008 US 99883 P; 15.06.2009 US 186979 P
(43) Date of publication of application: 31.03.2010
(73) Proprietor: Rehrig Pacific Company, Los Angeles, CA 90058 (US)
(72) Inventor: Manuel, Nathan, Unit 2, Redondo Beach, California 90278 (US)
(74) Representative: Leckey, David Herbert

(56) References cited:
- EP-A2- 0 071 467
- DE-U1- 7 621 951
- GB-A- 1 018 243
- GB-A- 1 424 890
- GB-A- 2 445 414
- US-A1- 2004 129 699

## Description

The present invention relates generally to a bin, and in particular a collapsible bin that is particularly useful for bulk meat processing.

In meat processing plants, product is sometimes temporarily stored in large cardboard boxes with plastic liners. Sometimes, the cardboard bows or fails under the weight of the meat. After use, the boxes and liners are discarded.

It is therefore desirable to provide an improved bin arrangement which addresses the above described problems and/or which more generally offers improvements or an alternative to existing arrangements.

EP-A-0071467 discloses a bin having the features of the preamble of claim 1. Containers having a base and detachable wall panels are disclosed in GB-A-2445414 and GB-A-1424890.

According to the present invention there is provided a bin as set forth in claim 1.

In an embodiment of the invention there is provided a reusable, washable, plastic, collapsible bin. The bin includes a plastic base. Four walls extend upwardly from the base and interlock with one another near the corners. Straps around the walls hold the walls together temporarily during use and keep the walls interlocked with one another. After use, the straps are removed and the walls can easily be removed from the base. The walls and base are then washed for subsequent reuse.

These and other features of the application can be best understood from the following specification and drawings.

The present invention will now therefore be described by way of example only with reference to the following figures in which:
Figure 1 is a perspective view of one embodiment of a bin according to the present invention;
Figure 2 is a side view of the bin of Figure 1;
Figure 3 is an end view of the bin of Figure 1;
Figure 4 is an exploded view of the bin of Figure 1;
Figure 5 is a perspective view of an end wall of Figure 4;
Figure 6 is a perspective view of a side wall of Figure 4;
Figure 7 is a perspective view of the base of Figure 1;
Figure 8 is a top view of the bin of Figure 1;
Figure 9 is an enlarged view of one of the corners of the bin of Figure 8;
Figure 10 is a section view taken along line 10-10 of Figure 8;
Figure 11 is an enlarged view of an upper end of an end wall of Figure 10;
Figure 12 is an enlarged view of the lower end of an end wall of Figure 10;
Figure 13 is a section view taken along line 13-13 of Figure 8;
Figure 14 is an enlarged view of the lower end of the side wall of Figure 13;
Figure 15 is a perspective view of the bin of Figure 1 in a collapsed position;
Figure 16 is a schematic, partial, top view of a bin according to a second embodiment;
Figure 17 is a perspective view of a bin according to a third embodiment;
Figure 18 is a perspective view of a side wall of the bin of Figure 17;
Figure 19 is a side view of the side wall of Figure 18;
Figure 20 is a top view of the side wall of Figure 18;
Figure 21 is an end view of an end wall of the bin of Figure 17;
Figure 22 is a perspective view of the end wall of Figure 21;
Figure 23 is a top view of the end wall of Figure 21; and
Figure 24 is a perspective view of the base of the bin of Figure 17.

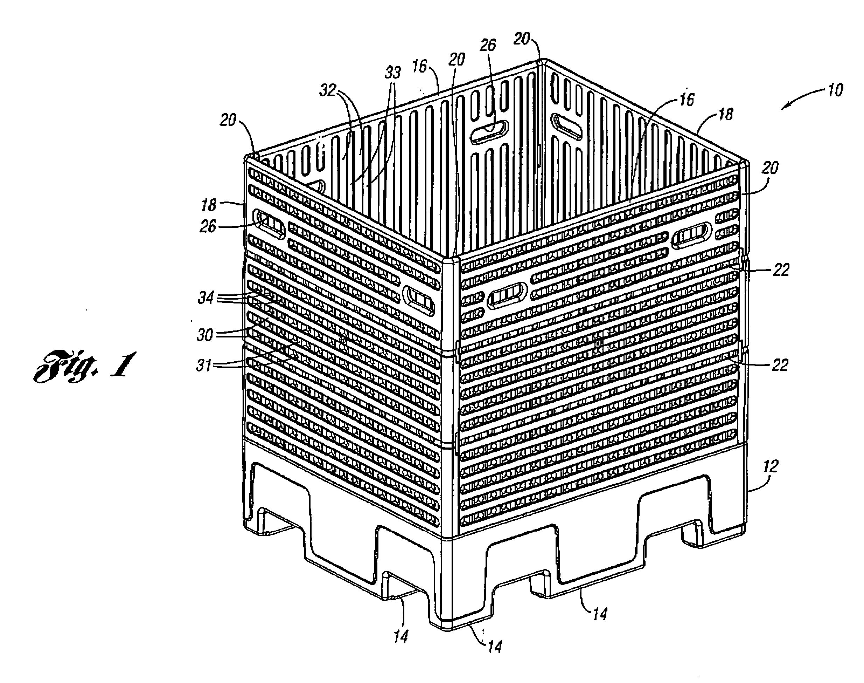

A bin 10 according to a first embodiment of the present invention is shown in Figure 1. The bin 10 includes a plastic base 12 having supports 14 extending downwardly therefrom. A pair of side walls 16 extend upwardly from the base 12 along side edges of the base 12. End walls 18 extend upwardly from end edges of the base 12 and include flanges 20 protruding from side edges of the end walls 18. The side walls 16 interlock with the flanges 20 of the end walls 18. The side walls 16 and end walls 18 are held together by flexible circumferential retainers, such as filaments, bands or straps 22 extending about the circumference of the bin 10. The straps 22 can be of any known type, such as the plastic straps often used in shipping.

The side walls 16 and end walls 18 are each separately roto-molded of a plastic material. Each of the side walls 16 and end walls 18 includes a plurality of horizontal hollow ribs 30 alternating with channels 31 along an exterior thereof and a plurality of vertical hollow ribs 32 alternating with vertical channels 33 along an interior thereof. Each of the exterior channels 31 includes a plurality of concave bosses or detents 34 molded into the bottom wall of each channel 31. Each of the side walls 16 and end walls 18 further includes a plurality of handles 26 molded therethrough.

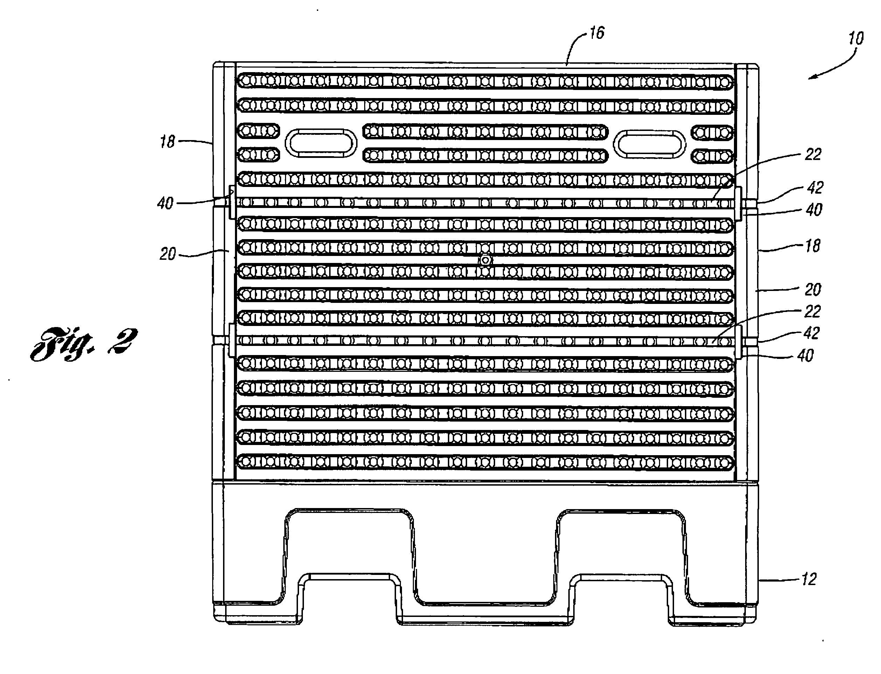

Figure 2 is a side view of the bin 10. As shown, each of the flanges 20 of the end walls 18 includes a recess forming an opening behind the strap 22. Each recess 40 is aligned with a recessed channel 42 in which the strap is received. The recess 40 creates an opening that facilitates cutting the strap 22 when it is time to disassemble the bin 10.

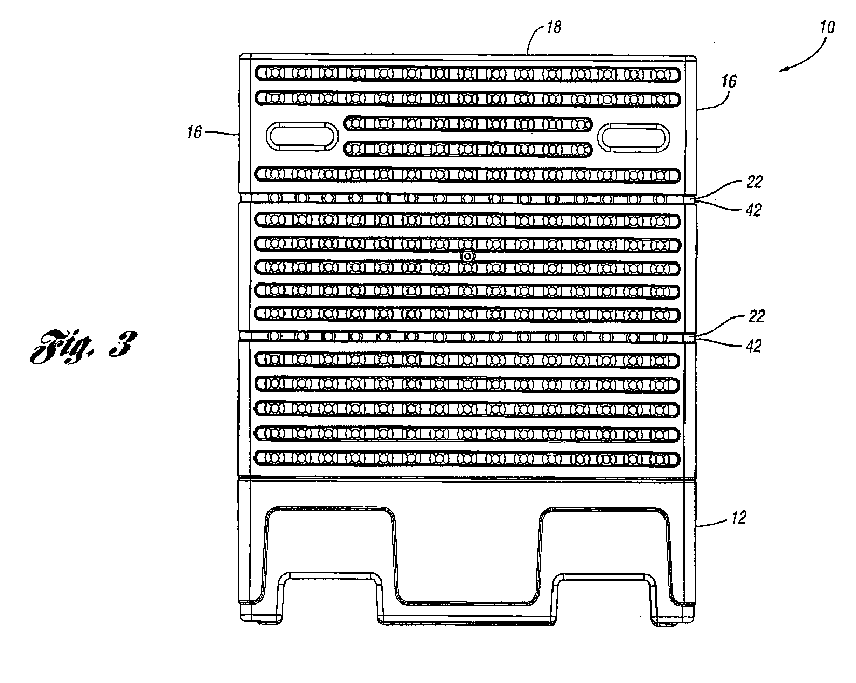

Figure 3 is an end view of the bin 10. The side walls 16 also include recessed channels 42 for receiving the straps 22.

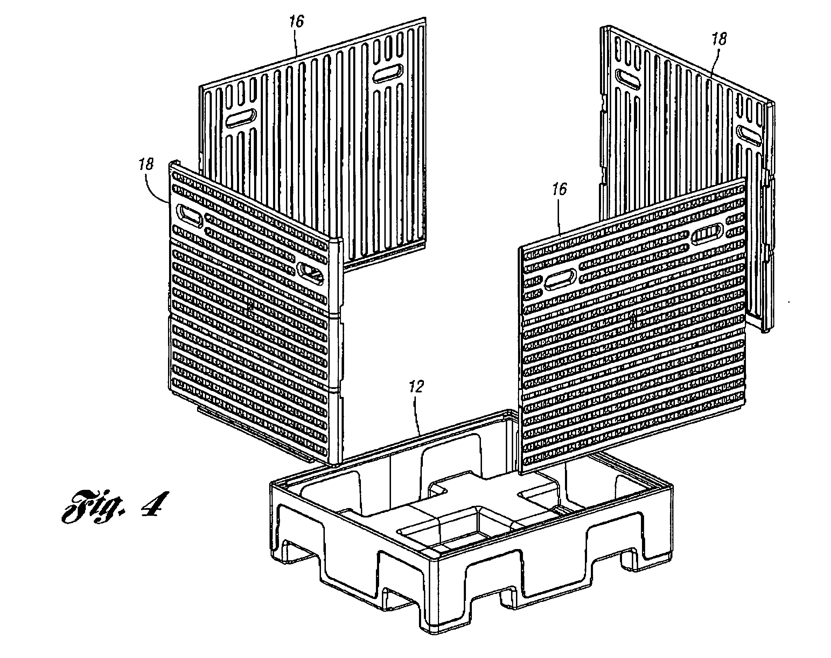

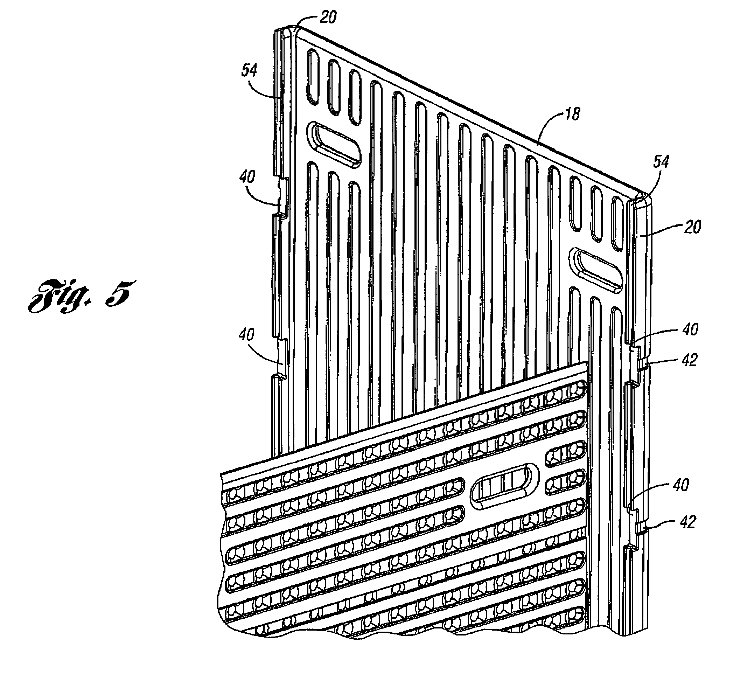

Figure 4 is an exploded view of the bin 10. Figure 5 is a perspective view of one of the end walls 18. Each of the flanges 20 includes an interlocking feature, such as the illustrated V-shaped recess 54. Figure 5 also better illustrates the recesses 40 on the outer ends of the flanges 20, which are aligned with the recessed channels 42 for receiving the straps 22 (Figure 1).

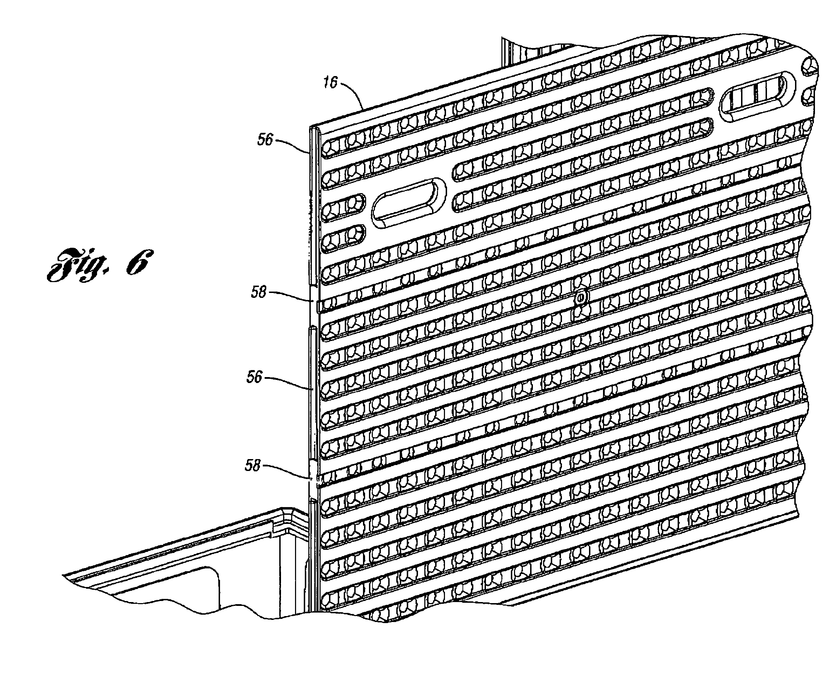

Figure 6 is a perspective view of one end of one of the side walls 16. Each end of the side walls 16 includes an interlocking feature complementary to that of the end wall 18 (Figure 5), such as the illustrated V-shaped ridge 56. The ridge 56 includes interruptions 58, which align with the recesses 40 (Figure 5) to create the opening for facilitating cutting of the straps 22.

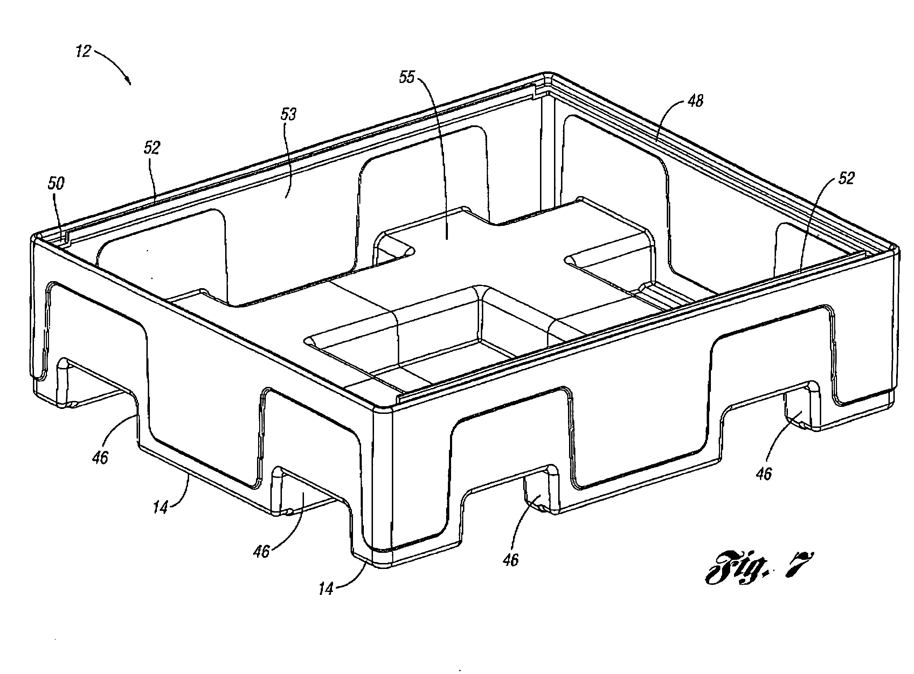

Figure 7 is a perspective view of the base 12. The base 12 includes a plurality of fork-receiving channels 46 defined between the supports 14. The base 12 includes end protrusions, such as end flanges 48 (one shown) protruding inwardly from an outer wall of the base 12 and side flanges 50 protruding inwardly from side edges of an outer wall of the base 12. In the embodiment shown, upstanding side protrusions, such as side flanges 52 protrude upwardly from an inner edge of each side flange 50. The base 12 is preferably roto-molded. After roto-molding, an upper panel (not shown) extending horizontally between the flanges 48 and the flanges 52 is cut away and removed from the base. This leaves a base 12 with an interior compartment defined by an exterior wall 53 about the perimeter of the base 12 and a base wall 55 that is shaped to define the channels 46. The base 12 could be water-tight, as would be formed by roto-molding, or could have drainage holes drilled or otherwise formed after molding.

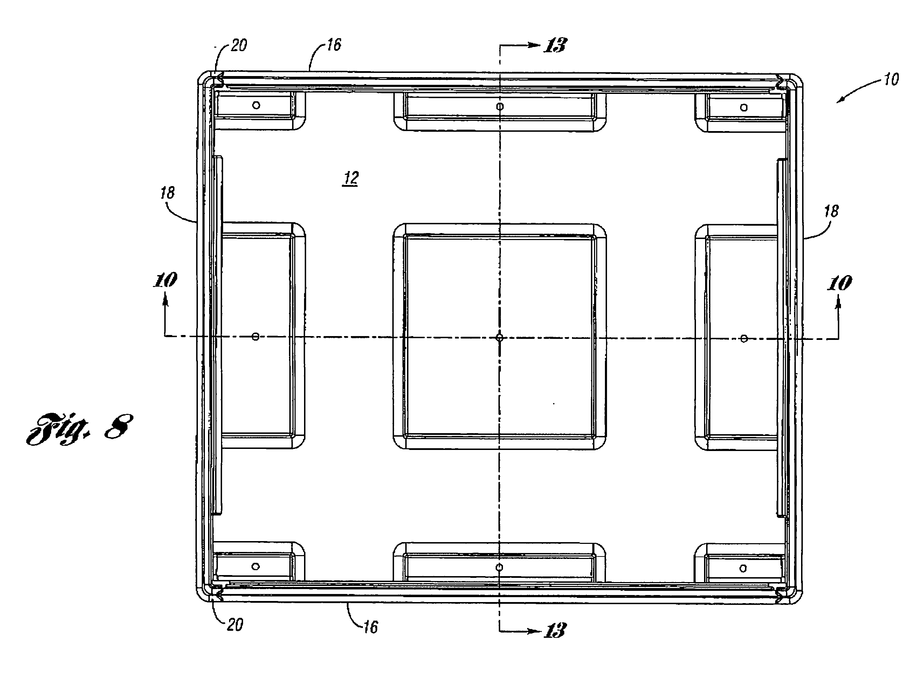

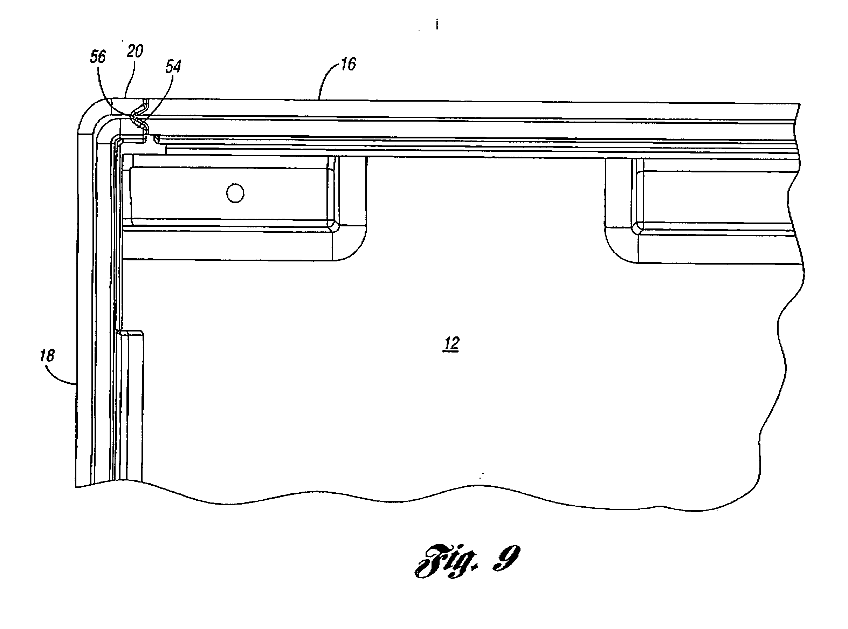

Figure 8 is a top view of the bin 10 of Figure 1. Figure 9 is an enlarged top view of one corner of the bin of Figure 8. As shown, the ridge 56 of the side wall 16 is received in and interlocked with the recess 54 of the flange 20 of the end wall 18. The other corners of the bin 10 would be similar.

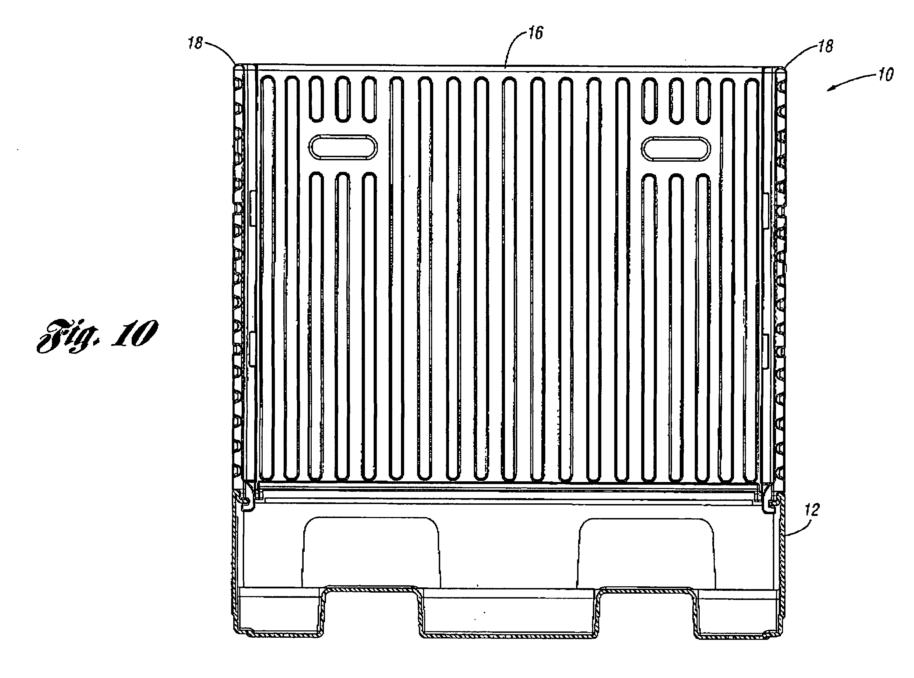

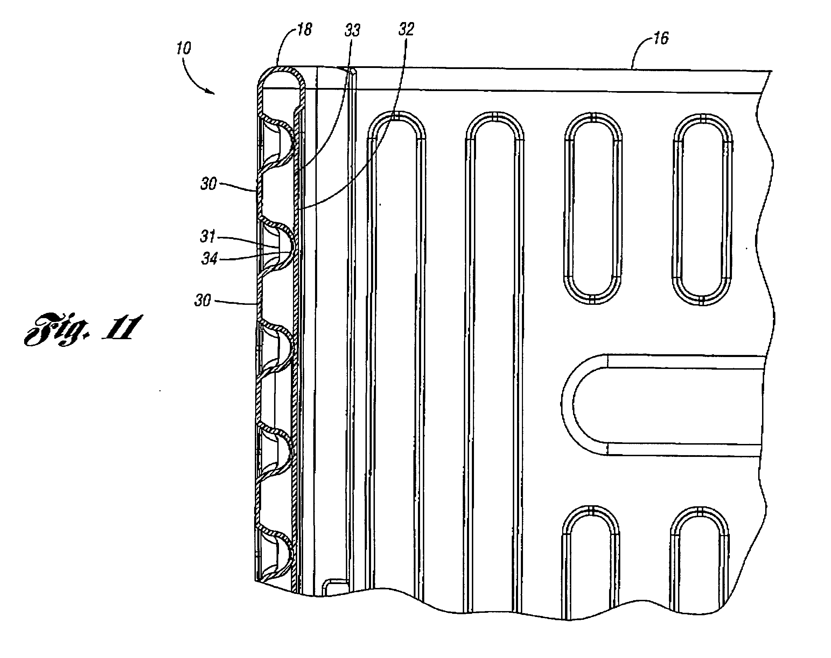

Figure 10 is a section view through the bin 10 along line 10-10 of Figure 8. Figure 11 is an enlarged view of an upper end of the end wall 18 of Figure 10. As indicated, each end wall 18 and side wall 16 is roto-molded and includes a plurality of horizontal hollow ribs 30 alternating with horizontal channels 31 on an exterior surface thereof. Further, a plurality of concave bosses or detents 34 are formed in the bottom wall of the channel 31. Each detent 34 contacts and connects with the bottom wall of each channel 33 formed between alternating hollow ribs 32 on the interior surface of the wall. This provides greatly increased strength to the end walls 18 and side walls 16.

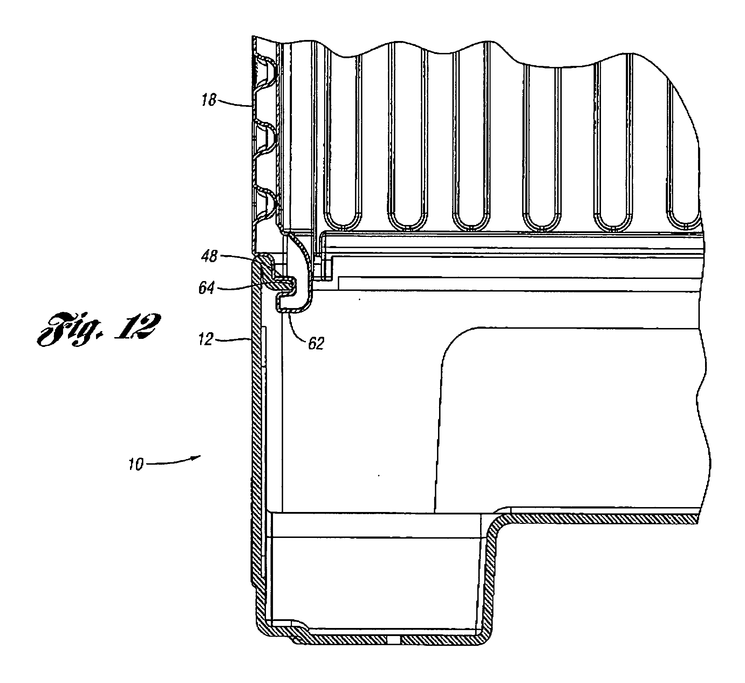

Figure 12 is an enlarged view of the lower end of the end wall 18. The lower end of each end wall 18 includes a horizontal channel 64 defined by a lower outwardly-directed ridge 62. The end flange 48 of the base 12 is received in the channels 64 and the remainder of the end wall 18 rests on the end flange 48 and the outer wall of the base 12. During assembly, the end walls 18 are assembled onto the base 12 first. The end wall 18 is assembled onto the flange 48 by placing the end wall 18 such that the end flange 48 is adjacent the channel 64. The end wall 18 is then moved toward the exterior, such that the end flange 48 is inserted into the channel 64 to the position shown in Figure 12.

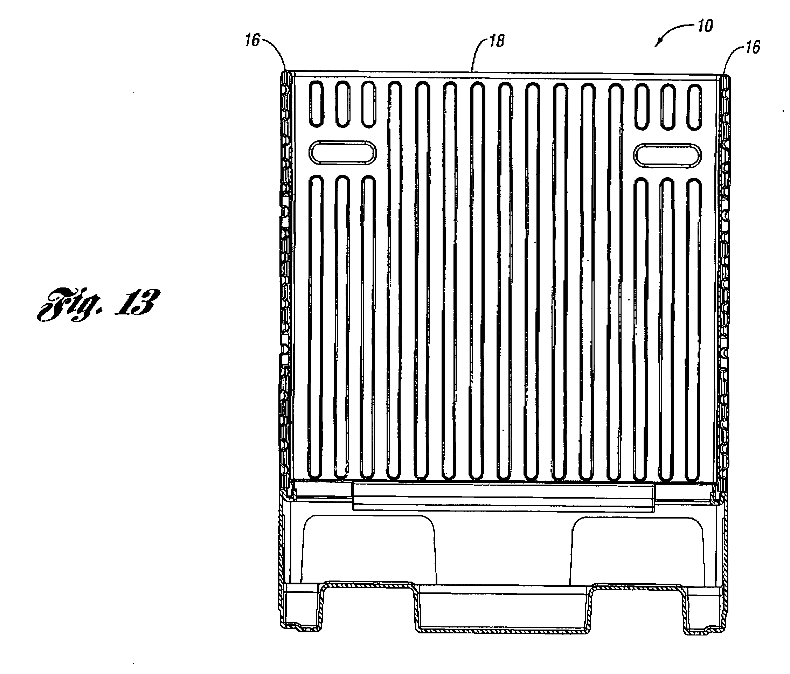

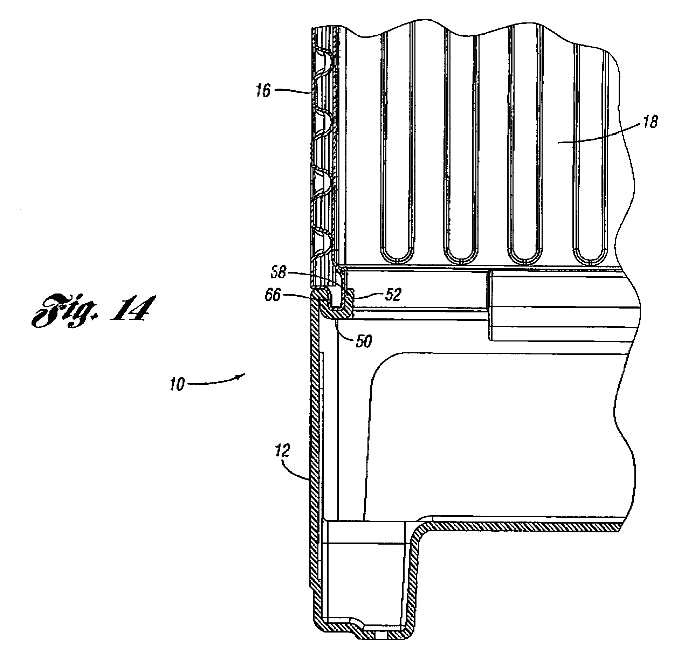

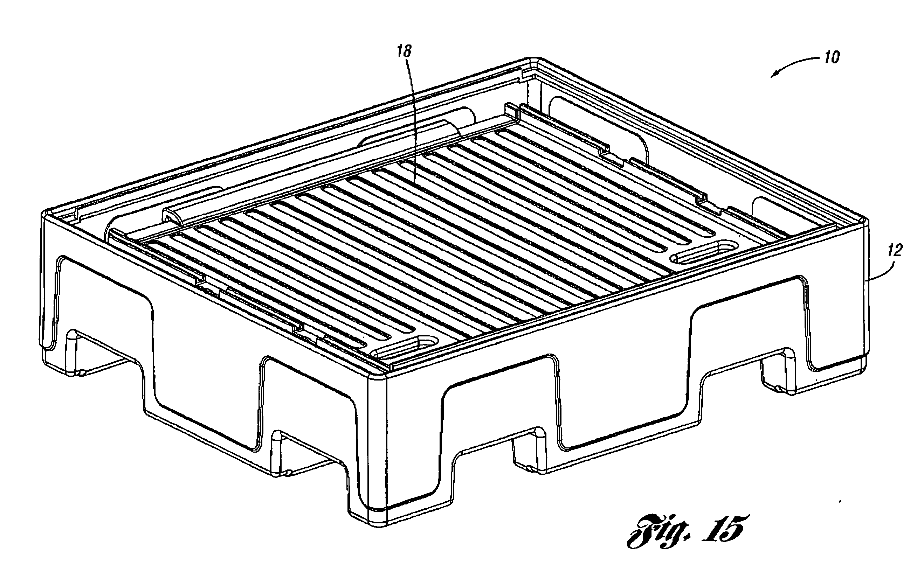

Figure 13 is a section view taken along line 13-13 of Figure 8. Figure 14 is an enlarged view of the lower end of the side wall 16. As shown, the lower end of the side wall 16 includes a lower protrusion or ridge 66 that is inserted into a side channel 68 defined outward of the side flange 52, such that the side wall 16 rests on the flange 50 and the outer wall of the base 12. During assembly, after the end walls 18 are installed, the side walls 16 are slid downward between the end walls 18. The ridges 56 (Figure 6) are slid into the recesses 54 (Figure 5) of the flanges 20 (Figure 5) of the end walls 18 until the lower protrusion 66 of the side wall 16 is received in the side channel 68 of the base 12. The straps 22 (Figure 1) are then wrapped around the side walls 16 and end walls 18, which maintains the walls in an upright position, and maintains the side walls 16 in an interlocking position with the end walls 18. After use, the straps 22 are cut, and the side walls 16 can be lifted up and removed from the base 12. The end walls 18 can similarly be removed from the base 12 by first sliding them toward the interior of the base 12. Both side walls 16 and both end walls 18 can then be placed in the interior of the base 12 as shown in Figure 15 for shipping. For example, the disassembled bin 10 can be shipped as shown in Figure 15 to a facility for cleaning and then shipped back to a warehouse or plant for reassembly and reuse.

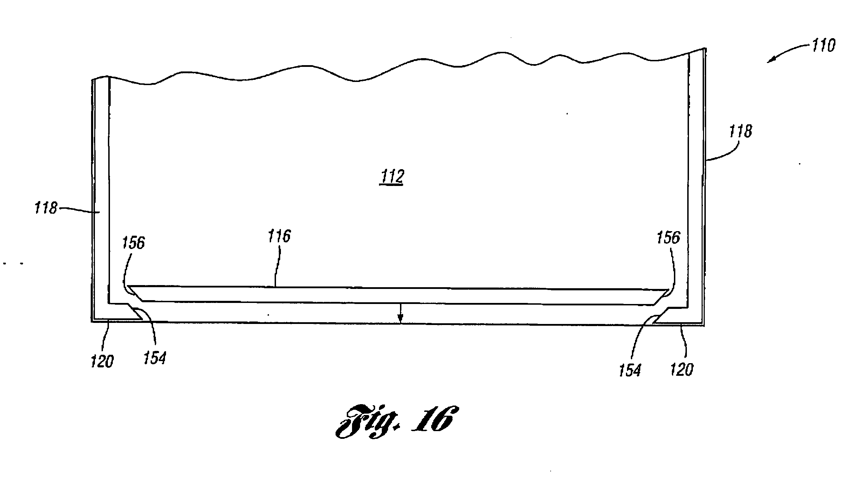

Figure 16 is a top view of an alternate bin 110 according to a second embodiment of the present invention. In this embodiment, the base 112, side walls 116 and end walls 118 are the same as shown in Figures 1-15 except as specifically shown or described. In the bin 110, the lower ends of the side walls 116 are similar to the lower ends of the end walls 18 of Figure 12 in that they also require placement of the side wall 116 toward the interior of the base 112 and then sliding the side wall 116 outwardly into engagement. Therefore, the engagement of the side walls 116 with the flanges 120 of the side walls 118 is modified in the bin 110. The side walls 116 include angled outer ends 156 that are angled to match angled outer ends 154 of the flanges 120. The ends 156 of the side walls 116 taper inwardly toward the exterior of the side walls 116 such that they can be slid toward the exterior of the bin 110 for assembly. The engagement of the end walls 118 with the base 112 is the same as in Figures 1-15.

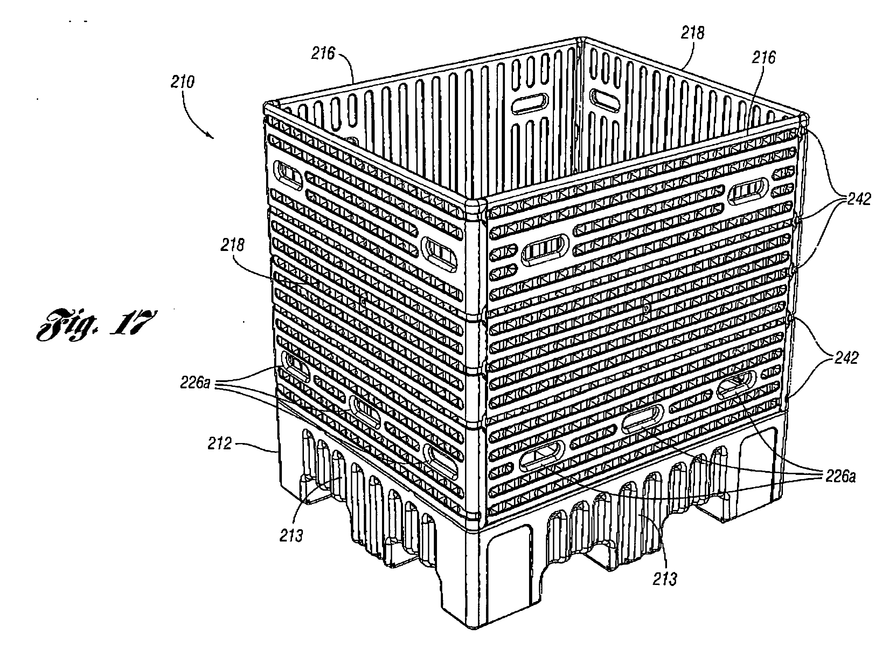

Figure 17 is a perspective view of a bin 210 according to a third embodiment. The bin 210 is identical to the bin 10 of the first embodiment except as specifically described below or shown in the Figures. The bin 210 includes a base 212, side walls 216 and end walls 218. The side walls 216 and end walls 218 include more recessed channels 242 for accommodating straps (not shown), so that the user can choose how many straps to use and where to locate them. Additionally, the side walls 216 and end walls 218 also both include lower handle openings 226a to assist in the assembly process. The base 212 includes vertical rotomolded ribs 213 to increase the strength and rigidity of the base 212. The ribs 213 significantly decrease the deflection of the base 212 under load.

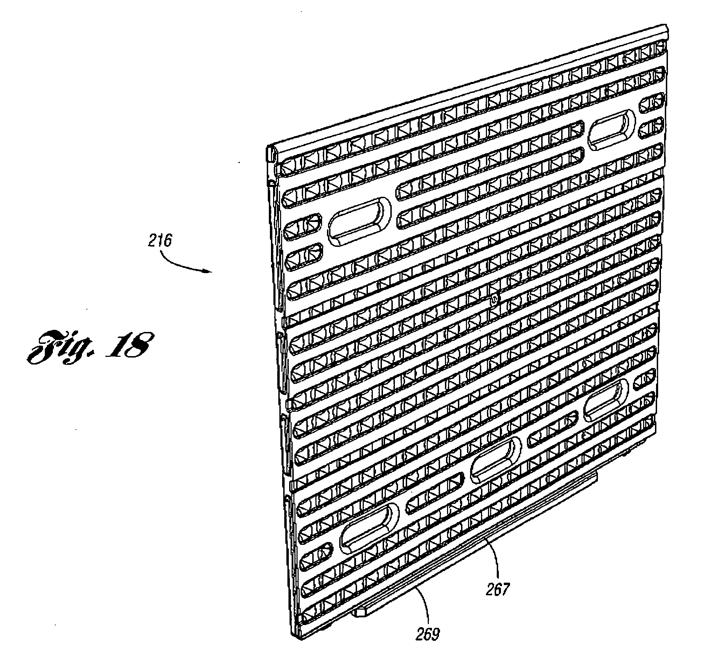

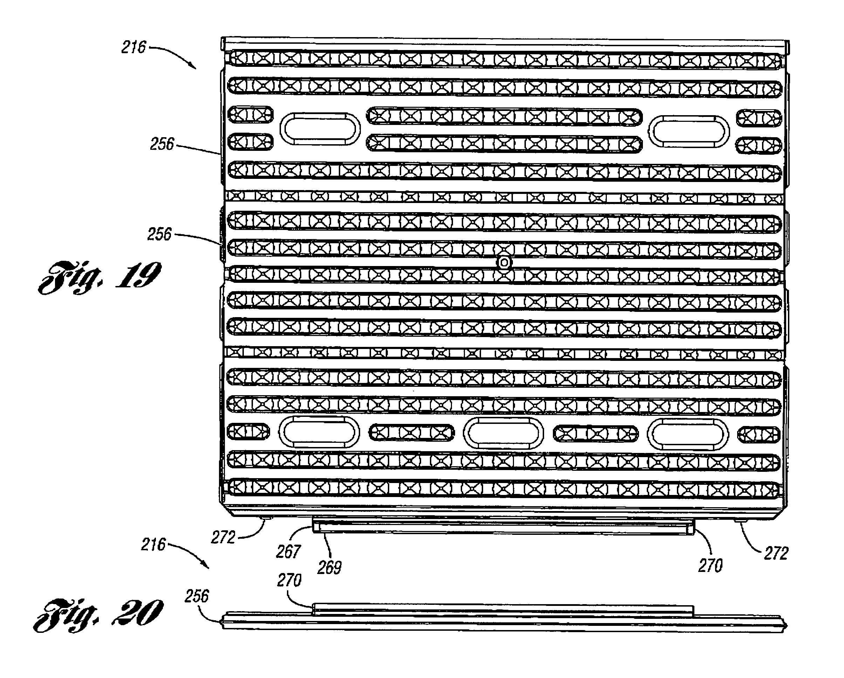

Figure 18 is a perspective view of a side wall 216 of the bin 210 of Figure 17 and Figure 19 is a side view. The lower end of each side wall 216 includes a horizontal channel 267 defined by a lower outwardly-directed ridge 269. Each end of the side walls 216 includes an interlocking feature complementary to that of the end wall 218, such as the illustrated V-shaped ridge 256. The ridge 256 includes interruptions 258, which align with the recesses 240 to create the opening for facilitating cutting of the straps. In this embodiment, some of the interruptions 258 are chamfered. Also, in this embodiment, there are projections or tabs 272 which interact with detents in the base 212 to help retain the side walls 216 in the upright position during assembly. As shown in Figure 20, the lower outwardly-directed ridge 269 is a forwardly projecting portion of a hook 270 that extends inward and then downward from the interior of the side wall 216.

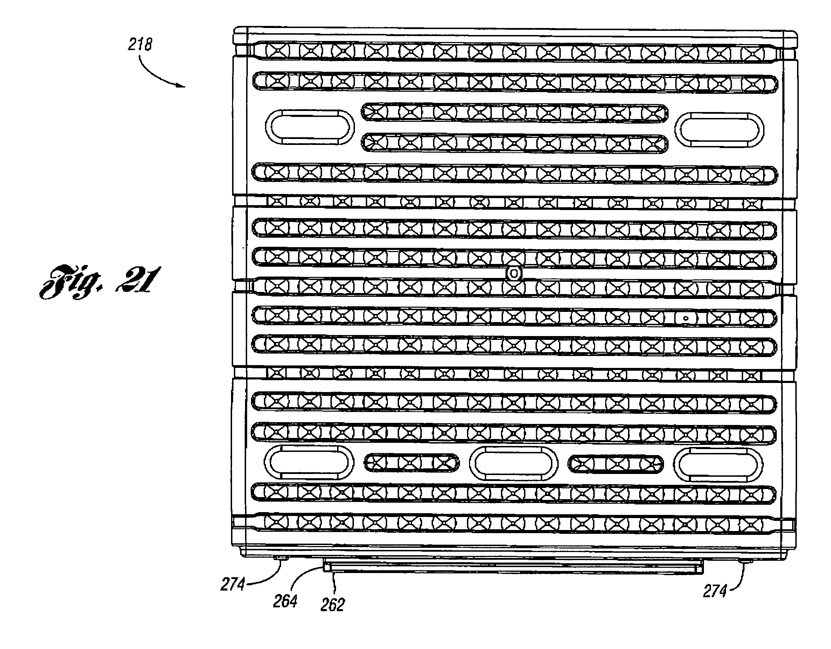

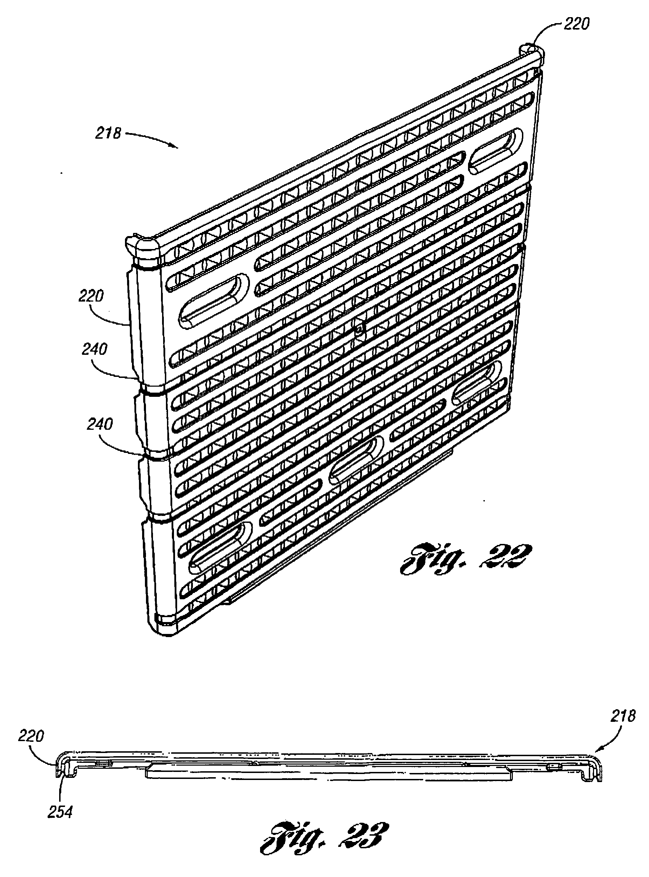

Figures 21-23 show one of the end walls 218. As shown in Figure 21, the end wall 218 includes the inwardly-directed ridge 262 and horizontal channel 264, as before. The end wall 218 also includes projections or tabs 274 for interacting with the base 212 to help retain the end walls 218 in the upright position during assembly. Referring to Figure 22, the end wall 218 includes the flanges 220 and recesses 240, as before, although some of the recesses 240 are chamfered. Referring to Figure 23, the flanges 220 include interlocking features, such as the v-shaped groove or recess 254, as before.

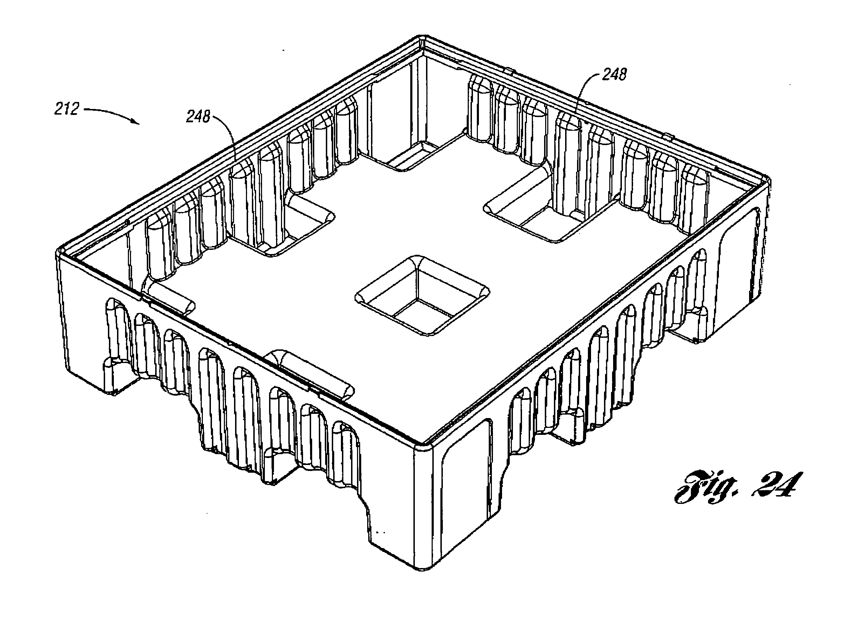

Referring to Figure 24, flanges 248 of the base 212 are received in the channels 267 of the side walls 216 (and the channels of the end walls, as in the first embodiment). In this embodiment, all of the side walls 216 and end walls 218 are positively locked to the base 212 to prevent separation from the base 212.

In accordance with the provisions of the patent statutes and jurisprudence, exemplary configurations described above are considered to represent a preferred embodiment of the invention. However, it should be noted that the invention can be practiced otherwise than as specifically illustrated and described without departing from its spirit or scope.

## Claims

1. A bin (10,110,210) comprising:
a base (12,112,212);
a plurality of walls (16,18,116,118,216,218) interlocking with the base (12,112,212), the plurality of walls (16,18,116,118,216,218) interlocking with one another, and at least one of the walls (16,18,116,118,216,218) including a plurality of first hollow ribs (30) alternating with parallel first channels (31) on a first side of the at least one wall (16,18,116,118,216,218); and
at least one flexible circumferential retainer (22) extending about the plurality of walls (16,18,116,118,216,218) to hold the walls together; **characterised in that**
said at least one wall (16,18,116,118,216,218) further includes a plurality of second hollow ribs (32) alternating with parallel second channels (33) along an opposite side of the at least one wall (16,18,116,118,216,218), wherein the first hollow ribs (30) and first channels (31) are transverse to the second hollow ribs (32) and second channels (33).

2. The bin (10) of claim 1 wherein the base (12) includes at least one horizontal flange (48,50) and wherein at least one of the plurality of walls (18) interlocks with the horizontal flange (48,50).

3. The bin (10,110,210) of claim 1 or 2 wherein the at least one wall (16,18,116,118,216,218) is retained in interlocking engagement with the base (12,112,212) by an adjacent wall (16,18,116,118,216,218), which prevents the at least one wall (16,18,116,118,216,218) from moving away from the exterior of the bin (10,110,210).

4. The bin (10,110,210) of claim 3 wherein the adjacent wall (16,18,116,118,216,218) interlocks with the at least one wall (16,18,116,118,216,218) by a sliding interlocking engagement.

5. The bin (10) of any preceding claim wherein one of the at least one wall (16,18) and the adjacent wall (16,18) includes a protrusion (56) received in a recess (54) in the other of the at least one wall (16,18) and the adjacent wall (16,18) to provide the interlocking engagement between the at least one wall (16,18) and the adjacent wall (16,18).

6. The bin (10,110,210) of any preceding claim wherein at least one of the plurality of walls (16,18,116,118,216,218) includes a flange (20,120,220) protruding generally perpendicular thereto from one lateral end of the at least one wall (16,18,116,118,216,218).

7. The bin (10,110,210) of any preceding claim wherein at least one of the plurality of walls (16,18,116,118,216,218) includes a recessed channel (42,242) for receiving the at least one flexible circumferential retainer (22) and wherein at least one of the plurality of walls (16,18,116,118,216,218) includes at least one recess (40,240) across which the retainer (22) extends to facilitate cutting of the retainer (22).

8. The bin (10,110,210) of any preceding claim wherein at least one of the plurality of walls (16,18,116,118,216,218) includes at least one projection (66,274) downward for interfering with the base (12) to retain the at least one wall (16,18,116,118,216,218) in an upright position before the others of the plurality of walls are assembled to the base (12).

9. The bin (10,110,210) of any preceding claim wherein the base (12,112,212) includes a plurality of vertical corrugations (32,33).

10. The bin (10,110,210) of any preceding claim wherein the first hollow ribs (30) and first channels (31) are horizontal and the second hollow ribs (32) and second channels (33) are vertical.

11. The bin (10,110,210) of any preceding claim wherein each of the first channels (31) includes a plurality of concave bosses (34) molded into a bottom wall of each channel.

## Patentansprüche

1. Behälter (10, 110, 210) umfassend:
eine Basis (12, 112, 212);
mehrere Wände (16, 18, 116, 118, 216, 218), die mit der Basis (12, 112, 212) ineinandergreifen, wobei die mehreren Wände (16, 18, 116, 118, 216, 218) miteinander ineinandergreifen und wenigstens eine der Wände (16, 18, 116, 118, 216, 218) mehrere erste hohle Rippen (30) enthält, die sich mit parallelen ersten Furchen (31) auf einer ersten Seite der wenigstens einen Wand (16, 18, 116, 118, 216, 218) abwechseln; und
wenigstens eine flexible, umlaufende Haltevorrichtung (22), die um die mehreren Wände (16, 18, 116, 118, 216, 218) herum verläuft, um die Wände zusammenzuhalten, **dadurch gekennzeichnet, dass**
die wenigstens eine Wand (16, 18, 116, 118, 216, 218) ferner mehrere zweite hohle Rippen (32) enthält, die sich entlang einer gegenüberliegenden Seite der wenigstens einen Wand (16, 18, 116, 118, 216, 218) mit parallelen zweiten Furchen (33) abwechseln, wobei die ersten hohlen Rippen (30) und die ersten Furchen (31) transversal zu den zweiten hohlen Rippen (32) und den zweiten Furchen (33) verlaufen.

2. Behälter (10) nach Anspruch 1, wobei die Basis (12) wenigstens einen horizontalen Flansch (48, 50) enthält und wobei wenigstens eine der mehreren Wände (18) mit dem horizontalen Flansch (48, 50) ineinandergreift.

3. Behälter (10, 110, 210) nach Anspruch 1 oder 2, wobei die wenigstens eine Wand (16, 18, 116, 118, 216, 218) durch eine benachbarte Wand (16, 18, 116, 118, 216, 218) mit der Basis (12, 112, 212) im Eingriff gehalten wird, wodurch die wenigstens eine Wand (16, 18, 116, 118, 216, 218) daran gehindert wird, sich von der Außenseite des Behälters (10, 110, 210) fortzubewegen.

4. Behälter (10, 110, 210) nach Anspruch 3, wobei die benachbarte Wand (16, 18, 116, 118, 216, 218) durch eine ineinandergreifende Schiebeverriegelung mit der wenigstens einen Wand (16, 18, 116, 118, 216, 218) ineinandergreift.

5. Behälter (10) nach einem der vorhergehenden Ansprüche, wobei die wenigstens eine Wand (16, 18) und die benachbarte Wand (16, 18) einen Vorsprung (56) enthält, der in einer Vertiefung (54) in der anderen der wenigstens einen Wand (16, 18) und der benachbarten Wand (16, 18) aufgenommen wird, um die ineinandergreifende Verbindung zwischen der wenigstens einen Wand (16, 18) und der benachbarten Wand (16, 18) bereitzustellen.

6. Behälter (10, 110, 210) nach einem der vorhergehenden Ansprüche, wobei wenigstens eine der mehreren Wände (16, 18, 116, 118, 216, 218) einen Flansch (20, 120, 220) enthält, der im Wesentlichen senkrecht dazu aus einem seitlichen Ende der wenigstens einen Wand (16, 18, 116, 118, 216, 218) herausragt.

7. Behälter (10, 110, 210) nach einem der vorhergehenden Ansprüche, wobei wenigstens eine der mehreren Wände (16, 18, 116, 118, 216, 218) eine versenkte Furche (42, 242) enthält, um die wenigstens eine flexible, umlaufende Haltevorrichtung (22) aufzunehmen, und wobei die wenigstens eine der mehreren Wände (16, 18, 116, 118, 216, 218) wenigstes eine Aussparung (40, 240) umfasst, über die die Haltevorrichtung (22) verläuft, um ein Durchtrennen der Haltevorrichtung (22) zu erleichtern.

8. Behälter (10, 110, 210) nach einem der vorhergehenden Ansprüche, wobei wenigstens eine der mehreren Wände (16, 18, 116, 118, 216, 218) wenigstens eine Auskragung (66, 274) nach unten enthält, um in die Basis (12) einzugreifen, und um die wenigstens eine Wand (16, 18, 116, 118, 216, 218) in einer aufrechten Stellung zu halten, bevor die anderen der mehreren Wände auf der Basis (12) angebracht werden.

9. Behälter (10, 110, 210) nach einem der vorhergehenden Ansprüche, wobei die Basis (12, 112, 212) mehrere senkrechte Wellungen (32, 33) enthält.

10. Behälter (10, 110, 210) nach einem der vorhergehenden Ansprüche, wobei die ersten hohlen Rippen (30) und die ersten Furchen (31) waagrecht und die zweiten hohlen Rippen (32) und die zweiten Furchen (33) senkrecht verlaufen.

11. Behälter (10, 110, 210) nach einem der vorhergehenden Ansprüche, wobei jede der ersten Furchen (31) mehrere konkave Vorsprünge (34) enthält, die in der Bodenwandung jeder Furche ausgebildet sind.

## Revendications

1. Corbeille (10, 110, 210) comprenant :
une base (12, 112, 212) ;
une pluralité de parois (16, 18, 116, 118, 216, 218) s'emboîtant sur la base (12, 112, 212), la pluralité de parois (16, 18, 116, 118, 216, 218) s'emboîtant l'une dans l'autre et au moins l'une des parois (16, 18, 116, 118, 216, 218) comprenant une pluralité de premières nervures creuses (30) alternant avec des premiers canaux parallèles (31) sur un premier côté de la au moins une paroi (16, 18, 116, 118, 216, 218) ; et
au moins un élément de retenue circonférentiel souple (22) s'étendant autour de la pluralité de parois (16, 18, 116, 118, 216, 218) pour maintenir les parois ensemble ; **caractérisée en ce que** :
ladite au moins une paroi (16, 18, 116, 118, 216, 218) comprend en outre une pluralité de secondes nervures creuses (32) alternant avec des seconds canaux parallèles (33) le long d'un côté opposé de la au moins une paroi (16, 18, 116, 118, 216, 218), dans laquelle les premières nervures creuses (30) et les premiers canaux (31) sont transversaux aux secondes nervures creuses (32) et aux seconds canaux (33).

2. Corbeille (10) selon la revendication 1, dans laquelle la base (12) comprend au moins un rebord horizontal (48, 50) et dans laquelle au moins l'une de la pluralité de parois (18) s'emboîte sur le rebord horizontal (48, 50).

3. Corbeille (10, 110, 210) selon la revendication 1 ou la revendication 2, dans laquelle la au moins une paroi (16, 18, 116, 118, 216, 218) est retenue emboîtée sur la base (12, 112, 212) par une paroi adjacente (16, 18, 116, 118, 216, 218) qui empêche la au moins une paroi (16, 18, 116, 118, 216, 218) de s'écarter de l'extérieur de la corbeille (10, 110, 210).

4. Corbeille (10, 110, 210) selon la revendication 3, dans laquelle la paroi adjacente (16, 18, 116, 118, 216, 218) s'emboîte sur la au moins une paroi (16, 18, 116, 118, 216, 218) par emboîtement coulissant.

5. Corbeille (10) selon l'une quelconque des revendications précédentes, dans laquelle une de la au moins une paroi (16, 18) et de la paroi adjacente (16, 18) comprend une saillie (56) reçue dans une cavité (54) de l'autre de la au moins une paroi (16, 18) et de la paroi adjacente (16, 18) pour assurer l'emboîtement entre la au moins une paroi (16, 18) et la paroi adjacente (16, 18).

6. Corbeille (10, 110, 210) selon l'une quelconque des revendications précédentes, dans laquelle au moins l'une de la pluralité de parois (16, 18, 116, 118, 216, 218) comprend un rebord (20, 120, 220) faisant saillie généralement perpendiculairement de celle-ci depuis une extrémité latérale de la au moins une paroi (16, 18, 116, 118, 216, 218).

7. Corbeille (10, 110, 210) selon l'une quelconque des revendications précédentes, dans laquelle au moins l'une de la pluralité de parois (16, 18, 116, 118, 216, 218) comprend un canal évidé (42, 242) pour recevoir le au moins un élément de retenue circonférentiel souple (22) et dans laquelle au moins l'une de la pluralité de parois (16, 18, 116, 118, 216, 218) comprend au moins une cavité (40, 240) en travers de laquelle l'élément de retenue (22) s'étend pour faciliter la découpe de l'élément de retenue (22).

8. Corbeille (10, 110, 210) selon l'une quelconque des revendications précédentes, dans laquelle au moins l'une de la pluralité de parois (16, 18, 116, 118, 216, 218) comprend au moins une saillie (66, 274) dirigée vers le bas pour interférer avec la base (12) afin de retenir la au moins une paroi (16, 18, 116, 118, 216, 218) en position verticale avant que les autres de la pluralité de parois soient assemblées sur la base (12).

9. Corbeille (10, 110, 210) selon l'une quelconque des revendications précédentes, dans laquelle la base (12, 112, 212) comprend une pluralité d'ondulations verticales (32, 33).

10. Corbeille (10, 110, 210) selon l'une quelconque des revendications précédentes, dans laquelle les premières nervures creuses (30) et les premiers canaux (31) sont horizontaux et les secondes nervures creuses (32) et les seconds canaux (33) sont verticaux.

11. Corbeille (10, 110, 210) selon l'une quelconque des revendications précédentes, dans laquelle chacun des premiers canaux (31) comprend une pluralité de protubérances concaves (34) moulées dans une paroi de fond de chaque canal.
